# EUROPEAN PATENT APPLICATION

(11) **EP 4 700 956 A1**
(43) Date of publication of application: **25.02.2026**
(21) Application number: 24915570.6
(22) Date of filing: 19.12.2024
(51) Int. Cl.: H01M 50/383, H01M 10/6563, H01M 10/613, H01M 50/251, H02J 7/00

(54) **FIRE-DETECTING SMOKE CONTROL APPARATUS FOR CHARGER/DISCHARGER, AND SMOKE CONTROL METHOD USING SAME**

(30) Priority: 03.01.2024 KR 20240001056; 17.12.2024 KR 20240188562
(71) Applicant: LG Energy Solution, Ltd., Seoul 07335 (KR)
(72) Inventor: AN, Tai Wook, Daejeon 34122 (KR)
(74) Representative: Goddar, Heinz J.
(86) International application number: PCT/KR2024/020714
(87) International publication number: WO 2025/146988

(57) **Abstract**

The present invention relates to a fire-detection type smoke control device for a charger/discharger comprising: a battery pack storage space for charging and discharging a battery pack; a fire detector provided on one side of the storage space; and a plurality of fans for drawing air from or exhausting air to the storage space, wherein, when the fire detector detects a fire, some or all of the plurality of fans are converted to exhaust air.

## Description

### [Technical Field]

This application claims the benefit of priority to Korean Patent Application No. 10-2024-0001056, filed January 3, 2024, and Korean Patent Application No. 10-2024-0188562, filed December 17, 2024, the disclosures of which are incorporated herein by reference in their entirety.

The present invention relates to a fire-detection type smoke control device for a charger/discharger and a smoke control method using same.

### [Related Art]

Recently, as the demand for portable electronic devices such as laptops, video cameras, and mobile phones has surged, and the development of electric vehicles, energy storage batteries, robots, and satellites has gained momentum, research on high-performance rechargeable batteries has been actively conducted.

Currently, commercially available batteries include nickel-cadmium, nickel-hydrogen, nickel-zinc, and lithium rechargeable batteries, with lithium rechargeable batteries gaining traction due to their freedom of charge and discharge, very low self-discharge rate, and high energy density.

In the case of these lithium secondary batteries, the batteries are sequentially assembled and activated before being shipped as a finished product. In the assembly process, the laminate of the positive electrode, negative electrode, and separator is housed and sealed in an exterior material along with the electrolyte. In the activation process, an initial charge/discharge event is executed for the battery that has undergone the assembly process. By the activation process, the electrode material in the battery is activated.

Conventional chargers/dischargers are designed to charge and discharge multiple cells simultaneously, and, therefore, it is essential to monitor temperature changes during battery charging and discharging to ensure operation within a safe temperature range.

Despite these precautions, in the event of a fire in a charger/discharger, the smoke is removed using the exhaust system of the entire plant equipped with a charger/discharger, and the smoke control equipment for the entire room.

However, when using the smoke control equipment for the entire factory, there are problems such as difficulty in using the smoke control equipment immediately at the beginning of the fire, inability to perform localized smoke control in the event of a localized fire, and contamination of the entire factory during the smoke control process due to partial fire.

Therefore, to solve the above problems, it is necessary to research a fire-detection type smoke control device for a charger/discharger capable of localized smoke control in the event of a localized fire.
(Patent Reference 1) Korean Laid-open Patent Publication No. 2016-0082102

### [Detailed Description of the Invention]

### [Technical Problem]

The present invention aims to provide a fire-detection type smoke control device for a charger/discharger and a smoke control method using same that can immediately control smoke in the event of a fire in a charger/discharger of a secondary battery, and can quickly access the scene to extinguish the initial fire, and, in the event of a localized fire, to control the fire with localized smoke control.

### [Technical Solution]

To achieve the above purposes, the present invention provides a fire-detection type smoke control device for a charger/discharger comprising: a battery pack storage space for charging and discharging a battery pack; a fire detector provided on one side of the storage space; and a plurality of fans for drawing air from the storage space, wherein, when the fire detector detects a fire, some or all of the plurality of fans are converted to exhaust air.

In one example of the present invention, the fire-detection type smoke control device for a charger/discharger may have some of the plurality of fans that normally draw air for cooling, and exhaust air when a fire detector detects a fire.

In one example of the present invention, the fans may be switched in rotation direction based on electrical polarity conversion to regulate the intake and exhaust of air.

In one example of the present invention, the switching of the rotation direction of the fans may be in response to an instruction from a control unit that has been informed of the occurrence of a fire by the fire detector.

In one example of the present invention, the smoke control device may further comprise an exhaust duct.

In one example of the present invention, after the fire detector detects a fire, the exhaust duct is opened, and some or all of the fans may exhaust air to control the smoke.

In one example of the present invention, a damper is installed in the exhaust duct to control the flow of air.

The present invention also provides a smoke control method using a fire-detection type smoke control device for a charger/discharger, comprising: detecting a fire from a fire detector provided on one side of a battery pack storage space; and, after detecting the fire, converting some or all of a plurality of fans that draw air from the battery pack storage space to exhaust air.

### [Advantageous Effects]

**In** the event of a fire, the fire-detection type smoke control device for a charger/discharger of the present invention can immediately control smoke to provide quick access to the scene to extinguish the initial fire and minimize fire loss to the entire charging/discharging room.

**In** addition, in the event of a localized fire, it is possible to perform a localized smoke control, so that the entire room does not need to be shut down, reducing the facility immobilization period from about 5 months when repairing the entire damage as in conventional technology to 2 months by performing localized restoration.

### [Brief Description of Drawing]

FIG. 1 is a schematic diagram of a smoke control device for a charger/discharger according to the prior art.
FIG. 2 is a schematic diagram illustrating a fire-detection type smoke control device for a charger/discharger according to one example of the present invention.

### [Best Mode]

Hereinafter, with reference to the accompanying drawings, the present invention will be described in detail so that it can be readily practiced by one having ordinary skill in the art. However, the present invention may be implemented in many different forms and is not limited to the examples described herein.

**In** order to clearly illustrate the present invention, portions not related to the description have been omitted, and identical or similar components are designated by the same reference numerals in the specification.

In addition, the terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

Examples will be described in detail below with reference to the accompanying drawings. However, the present invention may be implemented in many different forms and is not limited to the examples described herein.

In the event of a fire in a charger/discharger, the smoke is removed by using the exhaust facilities of the entire factory equipped with the charger/discharger and using the smoke control equipment for the entire room, but when using the smoke control equipment for the entire factory, there are problems such as difficulty in using the smoke control equipment immediately at the beginning of the fire, inability to perform localized smoke control in the event of a localized fire, and contamination of the entire factory during the smoke control process due to partial fire.

In the event of a localized fire, there is a need for research on a fire-detection type smoke control device for a charger/discharger that can provide localized smoke control, immediately control smoke, and provide quick access to the scene to extinguish the initial fire.

Accordingly, the inventors of the present invention have found that the above problems can be solved by means of a fire-detection type smoke control device for a charger/discharger that causes some or all of the plurality of fans to exhaust air when the fire detector detects a fire, and completed the present invention.

The present invention relates to a fire-detection type smoke control device for a charger/discharger, specifically, a fire-detection type smoke control device for a charger/discharger comprising: a battery pack storage space for charging and discharging a battery pack; a fire detector provided on one side of the storage space; and a plurality of fans for drawing air from or exhausting to the storage space, wherein, when the fire detector detects a fire, some or all of the plurality of fans exhaust air.

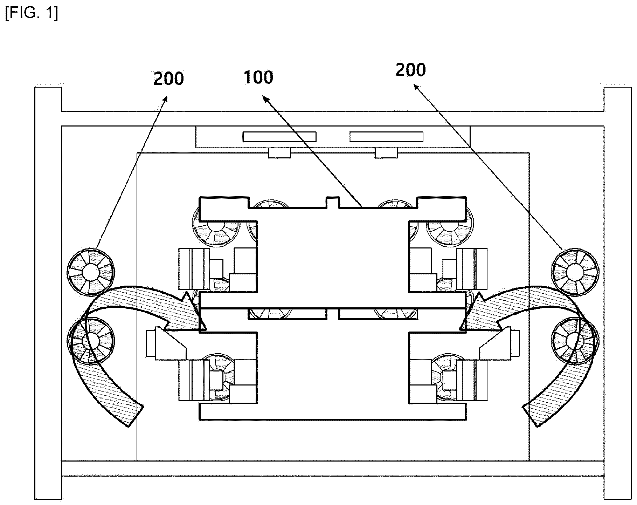

A smoke control device for a charger/discharger according to the prior art is shown in FIG. 1. A smoke control device for a charger/discharger according to the prior art is equipped with a fire detector (not shown in the drawing), and when a fire is detected by the fire detector, a cooling fan (200) provided in the smoke control device is used for cooling by unilaterally supplying air from the outside to the inside of the facility where the fire occurred. This resulted in insufficient extinguishing of fires and removal of smoke inside the charger/discharger.

The fire-detection type smoke control device for a charger/discharger of the present invention utilizes fan that is normally used for cooling, and in the event of a fire, the fan's wind direction is reversed and used for exhaust, enabling efficient smoke removal even if the charger/discharger is on fire.

### [Mode for Practicing the Invention]

To accomplish this, the fire-detection type smoke control device for a charger/discharger of the present invention may cause the plurality of fans (200) to normally draw air for cooling, and then some or all of the fans exhaust air when a fire detector (not shown in the drawing) detects a fire.

Specifically, the plurality of fans (200) may be rotated by a motor (not shown in the drawing) connected to the fans, and air generated by the rotation of the fans (200) may be transported axially.

The exterior of the plurality of fans (200) may be provided with an air guiding portion (not shown in the drawing) for guiding the flow of air, and this air guiding portion may be curved if necessary to minimize resistance to the flow of air, thereby inducing a smooth flow of air.

The plurality of fans (200) may be correspondingly provided with two sides of an air guide portion for guiding the flow of air, which is located outside the fans, so that the flow of air may be the same in both directions. From this, when the motor of the fan is rotated in the forward direction, cooling is achieved by the intake air, and when the motor of the fan is rotated in the reverse direction, the opposite airflow can be induced and exhausted with the same efficiency as the intake airflow.

In the fire-detection type smoke control device for a charger/discharger of the present invention, the fans may be switched in rotation direction based on electrical polarity conversion to regulate the intake and exhaust of air. In other words, the direction of the fan can be changed according to the change in electrical polarity of the motor connected to the fan, so that the motor of the fan can be rotated forward or reverse and the fan can perform air intake or exhaust.

In addition, the switching of the rotation direction of the fans may be in response to an instruction from a control unit (not shown in the drawing) that has been informed of the occurrence of a fire by the fire detector.

In the fire-detection type smoke control device for a charger/discharger of the present invention, when the fire detection device receives the fire occurrence signal from the fire detector, the control unit can instruct the electrical polarity change of the motor of the fan currently drawing air. For example, when the motor of the fan is rotated in the forward direction, cooling is achieved by the intake air, and when the motor of the fan is rotated in the reverse direction, the opposite airflow can be induced and exhausted with the same efficiency as the intake airflow.

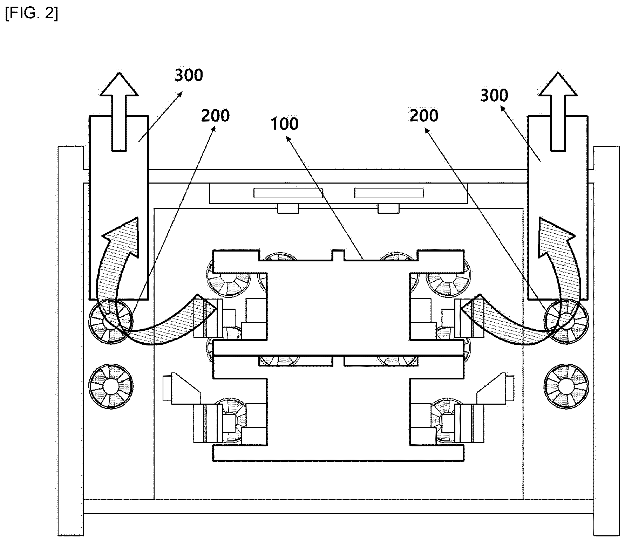

The fire-detection type smoke control device for a charger/discharger of the present invention includes a battery pack storage space (100) for charging and discharging a battery pack. FIG. 2 is a schematic illustration of a battery pack storage space (100) included in a fire-detection type smoke control device for a charger/discharger of the present invention.

The battery pack storage space (100) stores the battery pack and performs charging and discharging, and may have charge and discharge terminals on a side wall of the storage space, and it can be in contact with a battery pack laminated on a tray to apply current, wherein at least two sides of the battery pack storage space may have an open structure. Some of these openings can be used as passageways for loading and unloading battery packs into and out of the tray, while others can be used as access for the operator if needed.

The fire-detection type smoke control device for a charger/discharger of the present invention includes a fire detector (not shown in the drawing) provided on one side of the battery pack storage space. The fire detector may comprise a sensor disposed on one side of the storage space to detect a fire. The fire detector may utilize the heat or smoke generated by the fire to detect the fire early, and sound an alarm or notify the control unit of the fire. The fire detector may be any type of fire detector, such as a heat detector, smoke detector, or combination detector, and is not limited to any one type.

The fire-detection type smoke control device for a charger/discharger of the present invention includes a plurality of fans (200) that draw air from or exhaust air to the battery pack storage space. The battery pack storage space is provided with a plurality of fans (200) to cool the generated heat.

FIG. 2 is a schematic illustration of a fire-detection type smoke control device for a charger/discharger according to the present invention. FIG. 1 illustrates a conventional fire-detection type charger/discharger, where the bold arrow indicates the air flow when there is no fire and the fans (200) are used for cooling. The fans (200), which are used for cooling by bringing air from the outside to the inside, can be exhausted when a fire detector detects the occurrence of a fire, by changing the electrical polarity by the plurality of fans (200), thereby reversing the direction of rotation, as shown by the bold arrows in FIG. 2. In other words, the bold arrows in FIG. 2 show the air flow if all of the fans (200) that were used for cooling were converted to exhaust in the event of a fire.

Thus, the plurality of fans (200) may normally draw air for cooling, and exhaust air when a fire detector detects a fire. Furthermore, the fans (200) can switch the rotation direction according to the electrical polarity conversion, thereby regulating the intake and exhaust of air. Also, the switching of the rotation direction of the fans may be in response to an instruction from a control unit that has been informed of the occurrence of a fire by the fire detector.

The fire-detection type smoke control device for a charger/discharger of the present invention may further comprise a control unit (not shown in the drawing) that is capable of receiving a notification of a fire from the fire detector (not shown in the drawing) and instructing the fans to change the direction of rotation. The control unit can be used to adjust the polarity of the DC fan or AC fan so that it normally runs in the forward direction, but when a fire is detected, the PLC or digital in/out control unit can change the DC polarity or the AC phase to reverse the direction of rotation of the fan.

The fire-detection type smoke control device for a charger/discharger of the present invention may further comprise an exhaust duct (300). After the fire detector detects a fire, the exhaust duct (300) may be opened and fans may exhaust air to control smoke. As shown in FIG. 2, when the fire detector detects a fire, the damper-type exhaust duct (300) is opened and converted to the exhaust mode by the polarity conversion of the fan as described above, so that efficient smoke control can be achieved. The exhaust duct (300) may be of the damper type, but is not necessarily limited thereto.

In the fire-detection type smoke control device for a charger/discharger of the present invention, a damper (not shown in the drawing) may be installed in the exhaust duct to control the flow of air between the plurality of fans and the exhaust duct (300). The main functions of the damper are to prevent outside air from flowing back when the fan is turned off, to adjust the exhaust volume as needed, and to prevent other air currents from entering.

With this damper, the direction of airflow can be controlled by selectively opening and closing for intake and exhaust.

A plurality of the exhaust ducts (300) may be installed in the fire-detection type smoke control device for a charger/discharger of the present invention. The exhaust duct (300) may be a conduit for exhausting smoke generated by the fire to the outside, and as a plurality of exhaust ducts (300) may be located in different parts of the smoke control device, the smoke generated locally by a localized fire may be selected and exhausted to the outside as needed. For example, exhaust ducts (300) may be provided at the top, bottom, left and right sides or at each corner of the smoke control device to efficiently exhaust the smoke generated by opening or closing the exhaust ducts (300) as needed. At this time, the fan near the area where the fire occurs can be switched to exhaust mode, and the exhaust duct (300) near the area where the fire occurs can be opened to efficiently exhaust the smoke.

The present invention also provides a smoke control method using a fire-detection type smoke control device for a charger/discharger, comprising: detecting a fire from a fire detector provided on one side of a battery pack storage space; and, after detecting the fire, converting some or all of a plurality of fans that draw air from the battery pack storage space to exhaust air.

In the above smoke control method, the battery pack storage space, the fire detector, and the plurality of fans are the same as those described in the previously described fire-detection type smoke control device for a charger/discharger.

One of ordinary skill in the art relating to the present examples will understand that it can be implemented in modified forms without departing from the essential characteristics described above. Therefore, the disclosed methods should be considered from an illustrative rather than a limiting perspective. The scope of the invention is shown by the claims of the patent and not by the foregoing descriptions, and all differences within the scope thereof are to be construed as incorporated into the present invention.

### [Reference Numerals]

Battery pack storage space: 100
Fan: 200
Exhaust duct: 300

## Claims

1. A fire-detection type smoke control device for a charger/discharger, comprising a battery pack storage space to charge and discharge the battery pack;
a fire detector provided on one side of the battery pack storage space; and
a plurality of fans for drawing air from the battery pack storage space,
wherein some or all of the plurality of fans are converted to exhaust air when the fire detector detects a fire.

2. The fire-detection type smoke control device for a charger/discharger according to claim 1,
wherein the plurality of fans normally draw air for cooling and exhaust air when a fire detector detects a fire.

3. The fire-detection type smoke control device for a charger/discharger according to claim 2,
wherein the fans switch the direction of rotation according to an electrical polarity change, thereby regulating the intake and exhaust of air.

4. The fire-detection type smoke control device for a charger/discharger according to claim 3,
wherein the switching of the direction of rotation of the fans is in accordance with an instruction from a control unit which has been informed of the occurrence of a fire by the fire detector.

5. The fire-detection type smoke control device for a charger/discharger according to claim 1,
wherein the smoke control device further comprises an exhaust duct.

6. The positive electrode active material for a secondary battery according to claim 5,
wherein, after the fire detector detects a fire, the exhaust duct is opened, and some or all of the fans exhaust air to control the smoke.

7. The positive electrode active material for a secondary battery according to claim 5,
wherein a damper is installed in the exhaust duct to control the flow of air.

8. A smoke control method using a fire-detection type smoke control device for a charger/discharger, comprising: detecting a fire from a fire detector provided on one side of a battery pack storage space; and,
after detecting the fire, converting some or all of a plurality of fans that draw air from the battery pack storage space to exhaust air.
